# EUROPEAN PATENT APPLICATION

(11) **EP 4 769 075 A1**
(43) Date of publication of application: **01.07.2026**
(21) Application number: 24888901.6
(22) Date of filing: 23.08.2024
(51) Int. Cl.: G06F 3/01, H04N 13/363, G06F 3/04886, G06F 3/0484, G06F 3/00, H04W 4/80

(54) **PROJECTOR AND METHOD FOR TRANSMITTING TOUCH INPUT**

(30) Priority: 07.11.2023 KR 20230152633
(71) Applicant: Samsung Electronics Co., Ltd., Suwon-si, Gyeonggi-do 16677 (KR)
(72) Inventor: LEE, Pius, Suwon-si, Gyeonggi-do 16677 (KR); KIM, Sunwoo, Suwon-si, Gyeonggi-do 16677 (KR); KIM, Yuri, Suwon-si, Gyeonggi-do 16677 (KR)
(74) Representative: Gulde & Partner
(86) International application number: PCT/KR2024/012627
(87) International publication number: WO 2025/100705

(57) **Abstract**

Various embodiments of the present disclosure relate to a projector and a method for transmitting a touch input to a remote display device. To this end, the projector may: determine whether the projector is communicatively connected to a display device; and, if the projector is communicatively connected to the display device, receive, from the display device, a third output screen including at least one user interface object, project an image of the third output screen, obtain a user touch input with respect to the third output screen, and transmit third control data corresponding to the user touch input to the display device.

## Description

### [Technical Field]

The disclosure relates to a projector and a method for transmitting a touch input to a remote display device.

### [Background Art]

In the case of an electronic device having a touch screen, a user may control the electronic device through an intuitive and user-friendly interface method by touching the touch screen. However, in the case of a large-screen display device where the user watches content from a distance, directly approaching the display device to touch is inconvenient, so a user interface method through a remote control may be provided, or a user interface may be provided by mirroring the screen of the display device to an electronic device having a touch screen.

Due to the popularization of smart TVs and the widespread use of over the top (OTT) services, content and additional services provided by the display device have increased rapidly, and there are inconveniences in searching and browsing through the conventional user interface via a remote control or screen mirroring.

### [Disclosure of Invention]

### [Solution to Problems]

The disclosure relates to a projector and a method for transmitting a touch input to a remote display device. Embodiments of the disclosure provide a touch-recognition-enabled projector providing a screen capable of controlling a remote display device, a display device linked with the projector, and a method thereof. Embodiments of the disclosure provide a projector, a display device, and a method thereof that project a graphical user interface (GUI) of the remote display device at the same aspect ratio, or project a user interface object (e.g., a keyboard, various pop-up windows, etc.) which may block a main screen (e.g., a content screen) in the remote display device at the projector.

To solve the above-described technical problem, according to an embodiment of the disclosure, a display device may include a display, a communication interface performing data communication with a projector, a memory storing at least one instruction, and at least one processor electrically connected to the memory and executing the at least one instruction. The at least one processor may determine whether a communication connection to the projector is established using the communication interface; based on the communication connection to the projector being established, determine whether at least one user interface object is included in a first output screen, based on the at least one user interface object being included in the first output screen, generate a second output screen except for the at least one user interface object from the first output screen, and display the second output screen.

According to an example embodiment, at least one processor may, based on the communication connection to the projector being established, generate a third output screen including the at least one user interface object, and control the communication interface to transmit the third output screen to the projector.

According to an example embodiment, at least one processor may, based on the communication connection to the projector being established, control the communication interface to transmit the aspect ratio information of the display device to the projector.

According to an example embodiment, at least one processor may, based on the communication connection to the projector being established, generate at least one identification information capable of identifying the at least one user interface object, and control the communication interface to transmit the at least one identification information to the projector.

According to an example embodiment, at least one processor may, based on the communication connection to the projector being established, generate control information indicating a standard keyboard output, and control the communication interface to transmit the control information to the projector.

According to an example embodiment of the disclosure, a projector may include an image projection unit, a communication interface performing data communication with a display device, a memory storing at least one instruction, and at least one processor electrically connected to the memory and executing the at least one instruction. The at least one processor may determine whether a communication connection to a display device is established using the communication interface; based on the communication connection to the display device being established, control the communication interface to receive a third output screen including at least one user interface object from the display device, control the image projection unit to project the third output screen, obtain a user touch input for the third output screen, and control the communication interface to transmit third control data corresponding to the user touch input to the display device.

According to an example embodiment, at least one processor may, based on the communication connection to the display device being established, control the communication interface to receive the aspect ratio information of the display device from the display device, and control the image projection unit to project the third output screen at the same aspect ratio as the aspect ratio information of the display device.

According to an example embodiment, at least one processor may, based on the communication connection to the display device being established, control the communication interface to receive at least one identification information capable of identifying at least one user interface object from the display device, generate a fourth output screen including at least one user interface object corresponding to the at least one identification information, control the image projection unit to project the fourth output screen, obtain a user touch input for the fourth output screen, and control the communication interface to transmit fourth control data corresponding to the user touch input to the display device.

According to an example embodiment, at least one processor may, based on the communication connection to the display device being established, control the communication interface to receive control information indicating a standard keyboard output from the display device, generate a fifth output screen including a standard keyboard corresponding to the control information, control the image projection unit to project the fifth output screen, obtain a user touch input for the fifth output screen, and control the communication interface to transmit fifth control data corresponding to the user touch input to the display device.

According to an example embodiment of the disclosure, a method for operating a display device may comprise: determining whether a communication connection to a projector is established; based on the communication connection to the projector being established, determining whether at least one user interface object is included in a first output screen; based on the at least one user interface object being included in the first output screen, generating a second output screen except for the at least one user interface object from the first output screen; and displaying the second output screen.

According to an example embodiment, the method for operating the display device may further comprise, based on the communication connection to the projector being established, generating a third output screen including the at least one user interface object; and transmitting the third output screen to the projector.

According to an example embodiment, the method for operating the display device may further comprise, based on the communication connection to the projector being established, transmitting the aspect ratio information of the display device to the projector.

According to an example embodiment, the method for operating the display device may further comprise, based on the communication connection to the projector being established, generating at least one identification information capable of identifying the at least one user interface object; and transmitting the at least one identification information to the projector.

According to an example embodiment, the method for operating the display device may further comprise, based on the communication connection to the projector being established, generating control information indicating a standard keyboard output; and transmitting the control information to the projector.

According to an example embodiment of the disclosure, a method for operating a projector may comprise: determining whether a communication connection to a display device is established; based on the communication connection to the display device being established, receiving a third output screen including at least one user interface object from the display device; image projecting the third output screen; obtaining a user touch input for the third output screen; and transmitting third control data corresponding to the user touch input to the display device.

According to an example embodiment, the method for operating the projector may further comprise, based on the communication connection to the display device being established, receiving the aspect ratio information of the display device from the display device; and image projecting the third output screen at the same aspect ratio as the aspect ratio information of the display device.

According to an example embodiment, the method for operating the projector may further comprise, based on the communication connection to the display device being established, receiving at least one identification information capable of identifying at least one user interface object from the display device; generating a fourth output screen including at least one user interface object corresponding to the at least one identification information; image projecting the fourth output screen; obtaining a user touch input for the fourth output screen; and transmitting fourth control data corresponding to the user touch input to the display device.

According to an example embodiment, the method for operating the projector may further comprise, based on the communication connection to the display device being established, receiving control information indicating a standard keyboard output from the display device; generating a fifth output screen including a standard keyboard corresponding to the control information; image projecting the fifth output screen; obtaining a user touch input for the fifth output screen; and transmitting fifth control data corresponding to the user touch input to the display device.

According to an example embodiment of the disclosure, there may be included a non-transitory computer-readable recording medium recording a program for performing the method.

According to various example embodiments of the disclosure, an effect of eliminating the inconvenience experienced by a user in case of controlling a remote display device operating based on a complex GUI through a focus movement device such as a remote control may be provided.

According to various example embodiments of the disclosure, by projecting the GUI of the remote display device at a user-friendly size with the same aspect ratio at the projector, a user interface of an efficient size for user touch input may be provided, and the disadvantage in terms of economic efficiency caused in case of implementing direct touch recognition on the display device, which tends to be provided as a large screen, may be addressed. Further, since a user may provide a touch input through a projection screen nearby, an easy and intuitive user interface for the remote display device may be provided, and the usability disadvantage caused in case that the user directly touches the remote display device may be overcome.

Further, by outputting a main screen such as content except for the user interface object (e.g., a keyboard, a command window, etc.) on the remote display device and projecting the user interface object only at the projector, the user experience may be enhanced in both content immersion and user interface for the remote display device.

Effects achievable in example embodiments of the disclosure are not limited to the above-mentioned effects, but other effects not mentioned may be apparently derived and understood by one of ordinary skill in the art to which example embodiments of the disclosure pertain, from the following description. In other words, unintended effects in practicing embodiments of the disclosure may also be derived by one of ordinary skill in the art from example embodiments of the disclosure.

### [Brief Description of Drawings]

FIGS. 1 and 2 are diagrams illustrating examples in which a projector projects the same GUI as a display device at the same aspect ratio according to various example embodiments.
FIG. 3 is an diagram illustrating an example in which a display device displays content and a projector projects a GUI screen obtained from the display device according to various example embodiments.
FIG. 4 is a diagram illustrating an example in which a projector projects a keyboard obtained from a display device according to various example embodiments.
FIG. 5 is a diagram illustrating an example in which a projector projects a keyboard screen self-rendered according to various example embodiments.
FIG. 6 is a diagram illustrating an example in which a projector projects a user interface object screen self-rendered according to various example embodiments.
FIG. 7 is a block diagram illustrating an example configuration of a display device according to various example embodiments.
FIG. 8 is a block diagram illustrating an example configuration of a projector according to various example embodiments.
FIG. 9 is a flowchart illustrating an example method of operating a display device according to various example embodiments.
FIG. 10 is a flowchart illustrating an example method of operating a projector according to various example embodiments.

### [Mode for the Invention]

Hereinafter, various example embodiments of the disclosure are described in greater detail with reference to the drawings so that those skilled in the art to which the disclosure pertains may easily practice the disclosure. However, the disclosure may be implemented in other various forms and is not limited to the various example embodiments set forth herein. The same or similar reference denotations may be used to refer to the same or similar elements throughout the disclosure and the drawings. Further, for clarity and brevity, no description may be made of well-known functions and configurations in the drawings and relevant descriptions.

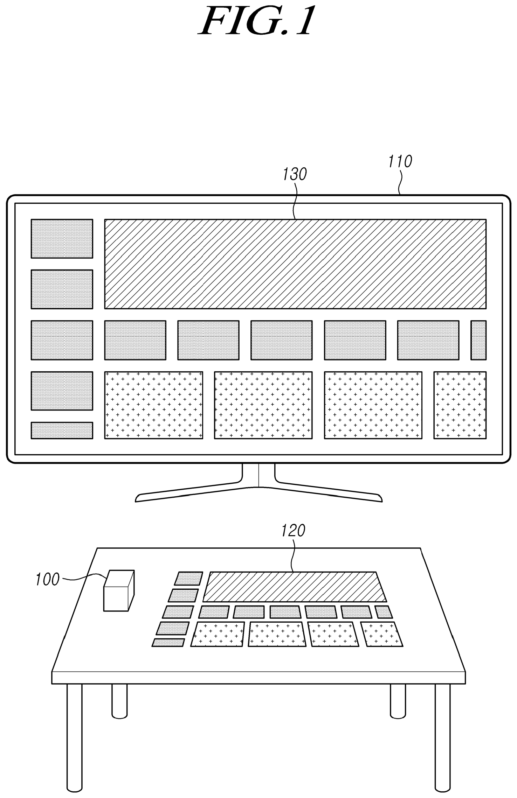

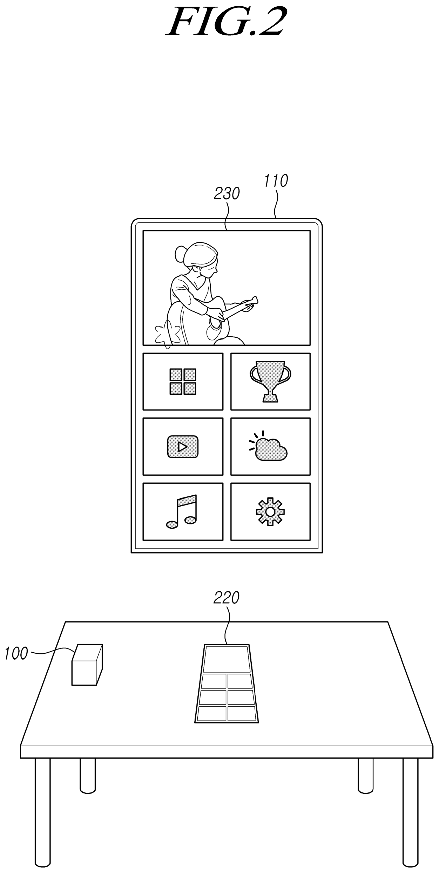

FIGS. 1 and 2 are diagrams illustrating examples in which a projector projects the same GUI as a display device according to various embodiments. FIGS. 1 and 2 are diagrams illustrating examples in which a projector projects the GUI of a display device at the same aspect ratio as the aspect ratio of the display device according to various example embodiments.

Referring to FIGS. 1 and 2, a projector 100 may project the same GUI screen 120 and 220 as the GUI 130 and 230 of a display device 110. The projector 100 may project the GUI screen 120 and 220 at the same aspect ratio as the aspect ratio of the display device 110. For example, referring to FIG. 1, in case that the aspect ratio of the display device 110 is 16:9 (width:height), the projector 100 may project the GUI screen 120 at 16:9. For example, referring to FIG. 2, in case that the aspect ratio of the display device 110 is 9:16 (width:height), the projector 100 may project the GUI screen 220 at 9:16. The GUI screen 120 and 220 may include at least one user interface object. The at least one user interface object includes, but is not limited to, a UI object associated with a user interface such as a related content search window, a text input window, a content icon, and other various pop-up windows.

According to an embodiment, the projector 100 may obtain an input, for example, a user input (e.g., a touch gesture input) for the at least one user interface object, and remotely control the display device 110 by transmitting control information corresponding to the user input to the display device 110.

According to an embodiment, the display device 110 may determine whether a communication connection to the projector 100 is established. In case that the communication connection to the projector 100 is established, the display device 110 may determine whether at least one user interface object is included in an output screen. The display device 110 may generate the third output screen 120 and 220 including the at least one user interface object. The display device 110 may transmit the third output screen 120 and 220 to the projector 100. The display device 110 may transmit the aspect ratio information of the display device 110 to the projector 100.

According to an embodiment, the projector 100 may determine whether a communication connection to the display device 110 is established. In case that the communication connection to the display device 110 is established, the projector 100 may receive the third output screen 120 and 220 including the at least one user interface object from the display device 110. The projector 100 may project the third output screen 120 and 220, and obtain a user touch input (e.g., a touch gesture input) for the third output screen 120 and 220. The projector 100 may transmit third control data corresponding to the user touch input to the display device 110, thereby remotely controlling the display device 110.

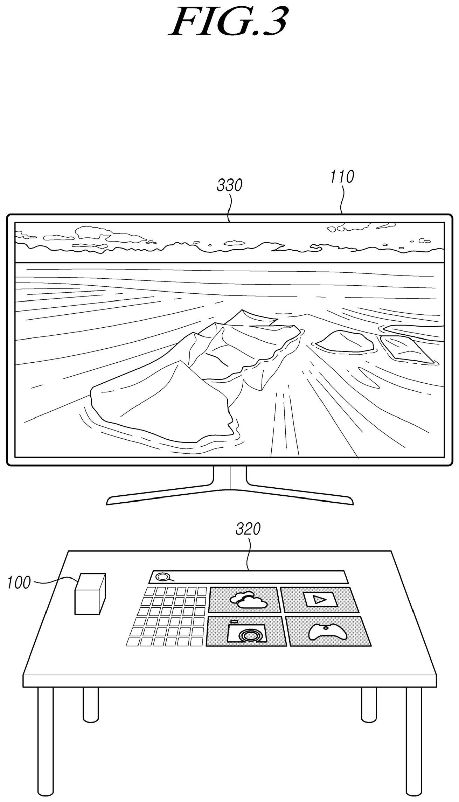

FIG. 3 is a diagram illustrating an example in which a display device displays content and a projector projects a GUI screen obtained from the display device according to various example embodiments.

Referring to FIG. 3, the display device 110 may display content 330. In case that the projector 100 is in communication connection to the display device 110 and the display device 110 intends to display a GUI screen 320, the display device 110 transmits the GUI screen 320 to the projector 100, and the projector 100 may project the received GUI screen 320. For example, the GUI screen 320 may be, but is not limited to, a screen that may be displayed overlaid on the content in the display device 110. The GUI screen 320 may include at least one user interface object. The at least one user interface object includes, but is not limited to, a UI object associated with a user interface such as a related content search window, a text input window, a content icon, and other various pop-up windows.

According to an embodiment, the projector 100 may obtain a user input (e.g., a touch gesture input) for the at least one user interface object, and remotely control the display device 110 by transmitting control information corresponding to the user input to the display device 110.

According to an embodiment, the display device 110 may determine whether a communication connection to the projector 100 is established. In case that the communication connection to the projector 100 is established, the display device 110 may determine whether at least one user interface object is included in a first output screen. In case that the at least one user interface object is included in the first output screen, the display device 110 may generate a second output screen 330 except for the at least one user interface object from the first output screen. The display device 110 may display the second output screen 330. The display device 110 may generate a third output screen 320 including the at least one user interface object. The display device 110 may transmit the third output screen 320 to the projector.

According to an embodiment, the projector 100 may determine whether a communication connection to the display device 110 is established. In case that the communication connection to the display device 110 is established, the projector 100 may receive the third output screen 320 including at least one user interface object from the display device. The projector 100 may project the third output screen 320, and obtain a user input (e.g., a touch gesture input) for the third output screen 320. The projector 100 may transmit third control data corresponding to the user input to the display device 110, thereby remotely controlling the display device 110. For example, the third control data may include a coordinate value on a user input plane, a code value or a key value corresponding to a specific UI object.

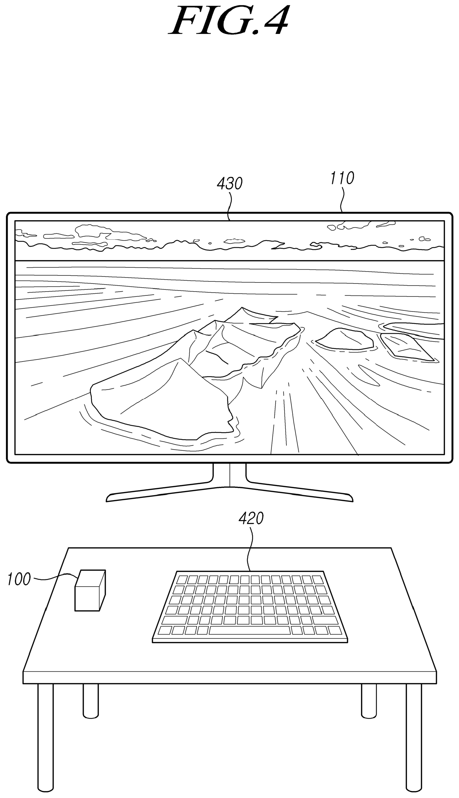

FIG. 4 is a diagram illustrating an example in which a projector projects a keyboard obtained from a display device according to various example embodiments.

Referring to FIG. 4, the display device 110 may display content 430. In case that the projector 100 is in communication connection to the display device 110 and the display device 110 intends to display a keyboard screen 420, the display device 110 transmits the keyboard screen 420 to the projector 100, and the projector 100 may project the received keyboard screen 420. The keyboard screen 420 may include, but is not limited to, any one layout among a QWERTY keyboard, a DVORAK keyboard, a COLEMAK keyboard, a QWERTZ keyboard, an AZERTY keyboard, a Korean 2-set keyboard, a Korean 3-set keyboard, or a Japanese industrial standard (JIS) layout keyboard, or a keyboard layout generated in the display device 110 in a non-standard manner.

According to an embodiment, the projector 100 may obtain a user input (e.g., a touch gesture input) for the keyboard screen 420, and remotely control the display device 110 by transmitting control information (e.g., an input key code value) corresponding to the user input to the display device 110.

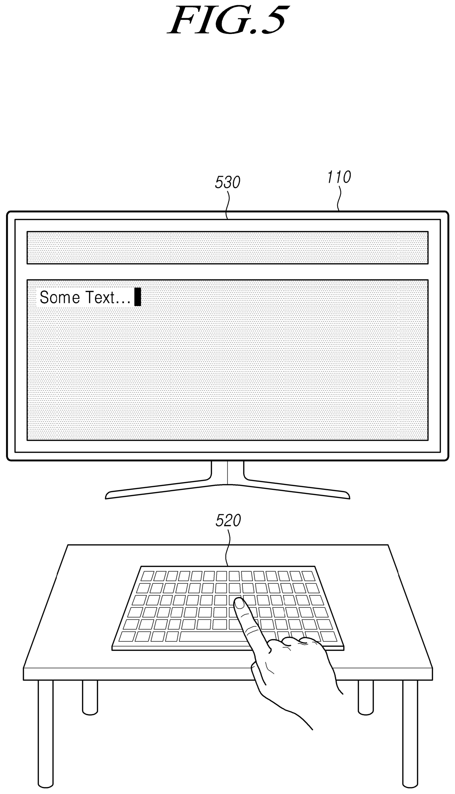

FIG. 5 is a diagram illustrating an example in which a projector projects a keyboard screen self-rendered according to various example embodiments.

Referring to FIG. 5, the display device 110 may display a screen 530 requesting a key input from a user. In this example, the display device 110 displays the screen 530 requesting a key input from the user, but the display device 110 may display various screens including, but not limited to, content. In case that the projector 100 is in communication connection to the display device 110 and the display device 110 intends to display a keyboard screen, the display device 110 may generate control information indicating a standard keyboard output. The control information indicating the standard keyboard output may include, but is not limited to, control information indicating any one among a QWERTY keyboard, a DVORAK keyboard, a COLEMAK keyboard, a QWERTZ keyboard, an AZERTY keyboard, a Korean 2-set keyboard, a Korean 3-set keyboard, or a Japanese industrial standard (JIS) layout keyboard. The display device 110 may transmit the control information to the projector 100.

According to an embodiment, the projector 100 may receive the control information indicating a standard keyboard output from the display device 110. The projector 100 may render and generate a fifth output screen 520 including a standard keyboard corresponding to the control information. The projector 100 may project the fifth output screen.

According to an embodiment, the projector 100 may obtain a user input (e.g., a touch gesture input) for the fifth output screen 520, and remotely control the display device 110 by transmitting fifth control data (e.g., an input key code value) corresponding to the user input to the display device 110.

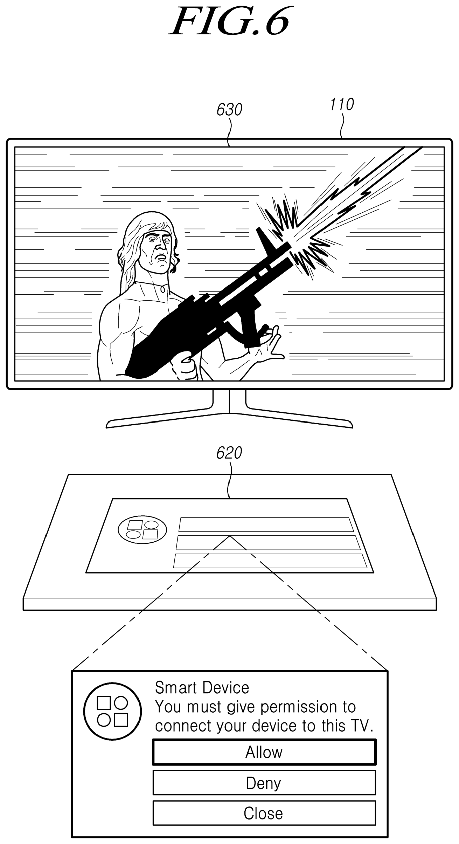

FIG. 6 is a diagram illustrating an example in which a projector projects a user interface object screen self-rendered according to various example embodiments.

Referring to FIG. 6, the display device 110 may display content 630. In case that the projector 100 is in communication connection to the display device 110 and the display device 110 intends to display a GUI screen, the display device 110 may generate at least one identification information capable of identifying at least one user interface object of the GUI screen. For example, the at least one identification information may include at least one identification information for each UI object of a related content search window and a text input window. The display device 110 may transmit the at least one identification information to the projector 100.

According to an embodiment, the projector 100 may determine whether a communication connection to the display device 110 is established. In case that the communication connection to the display device 110 is established, the projector 100 may receive at least one identification information capable of identifying at least one user interface object from the display device 110. The projector 100 may render and generate a fourth output screen 620 including at least one user interface object corresponding to the at least one identification information. For example, in case that the at least one identification information identifies each UI object of a related content search window and a text input window, the projector 100 may render and generate an output screen including the related content search window and the text input window. The projector 100 may project the fourth output screen 620, and obtain a user input (e.g., a touch gesture input) for the fourth output screen 620. The projector 100 may transmit fourth control data corresponding to the user input to the display device 110, thereby remotely controlling the display device 110. For example, the fourth control data may include a coordinate value on a user input plane, a code value or a key value corresponding to a specific UI object.

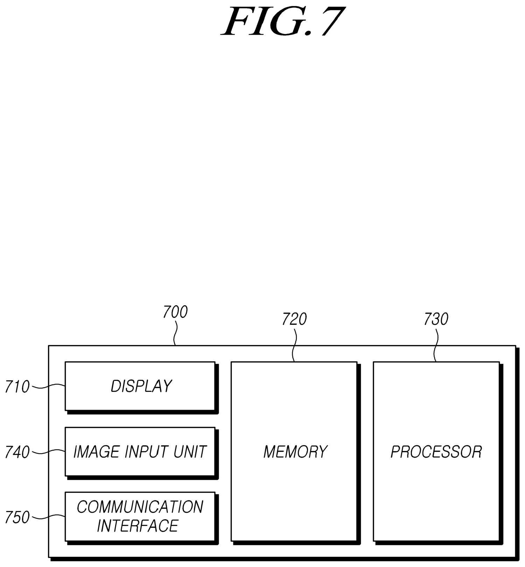

FIG. 7 is a block diagram illustrating an example configuration of a display device according to various example embodiments.

Referring to FIG. 7, a display device 700 may include a display 710 displaying an output image, a memory 720 storing at least one instruction, at least one processor 730 executing the at least one instruction, an image input unit 740, and a communication interface 750 transmitting/receiving data and signal to/from at least one external device. The display device 700 may include additional components other than those illustrated, or may omit at least one of the illustrated components.

According to an embodiment, the display device 700 may be, but is not limited to, a smartphone, a tablet PC, a PC, a smart TV, a mobile phone, a personal digital assistant (PDA), a laptop, a media player, a micro server, a digital broadcasting terminal, a navigation device, a kiosk, a home appliance, and other mobile or non-mobile computing device. Further, the display device 700 may be wearable terminals, such as watches and glasses, capable of performing various computing functions, such as video watching, and communication. The display device 700 may be various types of terminals without being limited to the above examples.

According to an embodiment, the display 710 may perform functions for outputting information in the form of numbers, characters, images, and/or graphics. The display 710 may include at least one hardware module for output. The at least one hardware module may include at least one of, e.g., a liquid crystal display (LCD), a light emitting diode (LED), a light emitting polymer display (LPD), an organic light emitting diode (OLED), an active matrix organic light emitting diode (AMOLED), or flexible LED (FLED). The display 710 may display a screen corresponding to data received from the processor 730. The display 710 may be referred to as "display unit," "output unit," or other terms having an equivalent technical meaning.

According to an embodiment, the memory 720 is a storage medium used by the display device 700 and may store data, such as at least one instruction or configuration information corresponding to at least one program. The program may include an operating system (OS) program and various application programs.

For example, the memory 720 may include at least one type of storage medium among a flash memory type, a hard disk type, a multimedia card micro type, a card type memory (e.g., SD or XD memory, etc.), a random access memory (RAM), a static random access memory (SRAM), a read only memory (ROM), an electrically erasable programmable ROM (EEPROM), a programmable ROM (PROM), a magnetic memory, a magnetic disk, and an optical disk.

According to an embodiment, the communication interface 750 may provide a wired/wireless communication interface enabling communication with an external device. The communication interface 750 may include at least one of wired Ethernet, a wireless LAN communication unit, and a short-range communication unit. The wireless LAN communication unit may include, e.g., Wi-Fi, and may support the wireless LAN standard (IEEE802.11x) of the institute of electrical and electronics engineers (IEEE). The wireless LAN communication unit may be wirelessly connected to an access point (AP) under the control of the processor 730. The short-range communication unit may perform short-range communication wirelessly with an external device under the control of the processor 730. The short-range communication may include Bluetooth, Bluetooth low energy, infrared data association (IrDA), ultra-wide band (UWB), Wi-Fi Direct, and near field communication (NFC). The external device may include a server device and a mobile terminal (e.g., smartphone, tablet, etc.) providing, e.g., a video service. According to an embodiment, the communication interface 750 may perform data communication with a projector 800.

According to an embodiment, the image input unit 740 may receive a viewing image and viewing image information through a tuner (not illustrated), an input/output unit (not illustrated), or the communication interface 750. The image input unit 740 may include at least one of the tuner and the input/output unit. The tuner may tune and select only the frequency of the broadcast channel to be received by the display device 700 among many radio components, by amplifying, mixing, and resonating the broadcast signals wiredly/wirelessly received. The broadcast signal may include video, audio, and additional data (e.g., electronic program guide (EPG)). The tuner may receive broadcast channels (or viewing images) from various broadcast sources, such as terrestrial broadcasts, cable broadcasts, satellite broadcasts, Internet broadcasts, and the like. The tuner may be implemented integrally with the display device 700 or may be implemented as a separate tuner electrically connected to the display device 700. The input/output unit may include at least one of a high definition multimedia interface (HDMI) input port, a component input jack, a PC input port, and a USB input jack capable of receiving an image and image information from an external device of the display device 700 under the control of the processor 730. It is understood by those skilled in the art that the input/output unit may be added, deleted, and/or changed according to the performance and structure of the display device 700.

According to an embodiment, the processor 730 may execute operation or data processing related to control and/or communication of at least one other component of the display device 700 by executing at least one instruction stored in the memory 720.

For example, the processor 730 may include at least one of a central processing unit (CPU), a graphic processing unit (GPU), a micro controller unit (MCU), a sensor hub, a supplementary processor, a communication processor, an application processor, an application specific integrated circuit (ASIC), or field programmable gate arrays (FPGA) and may have multiple cores.

According to an embodiment, the processor 730 may determine whether a communication connection to the projector 800 is established using the communication interface 750. In case that the communication connection to the projector 800 is established, the processor 730 may determine whether at least one user interface object is included in a first output screen. The at least one user interface object includes, but is not limited to, a UI object associated with a user interface such as a related content search window, a text input window, a content icon, and other various pop-up windows. In case that the at least one user interface object is included in the first output screen, the processor 730 may generate a second output screen except for the at least one user interface object from the first output screen. The processor 730 may control the display 710 to display the second output screen. The processor 730 may generate a third output screen including the at least one user interface object. The processor 730 may control the communication interface 750 to transmit the third output screen to the projector 800.

According to an embodiment, in case that the communication connection to the projector 800 is established, the processor 730 may control the communication interface 750 to transmit the aspect ratio information of a screen displayed in the display device 700 to the projector 800. For example, in case that the aspect ratio information of the display device 700 is 16:9 (width:height), the processor 730 may control the communication interface 750 to transmit the aspect ratio information corresponding to 16:9 to the projector 800.

According to an embodiment, in case that the communication connection to the projector 800 is established, the processor 730 may generate at least one identification information capable of identifying at least one user interface object. For example, the at least one identification information may include at least one identification information for each UI object of a related content search window and a text input window. The processor 730 may control the communication interface 750 to transmit the at least one identification information to the projector 800.

According to an embodiment, in case that the communication connection to the projector 800 is established, the processor 730 may generate control information indicating a standard keyboard output. The control information indicating the standard keyboard output may include, but is not limited to, control information indicating any one among a QWERTY keyboard, a DVORAK keyboard, a COLEMAK keyboard, a QWERTZ keyboard, an AZERTY keyboard, a Korean 2-set keyboard, a Korean 3-set keyboard, or a Japanese industrial standard (JIS) layout keyboard. The processor 730 may control the communication interface 750 to transmit the control information to the projector 800.

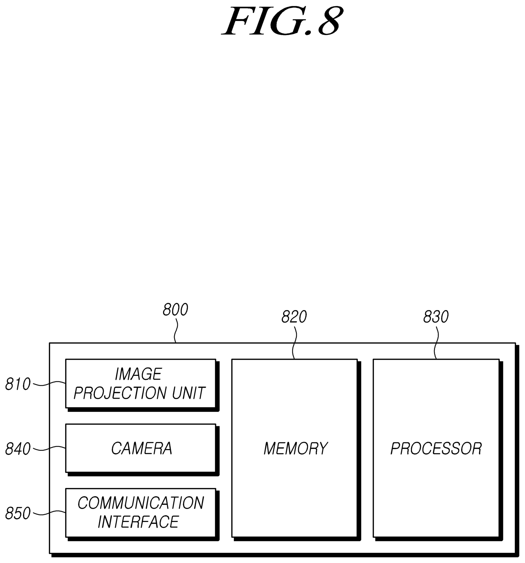

FIG. 8 is a block diagram illustrating an example configuration of a projector according to various example embodiments.

Referring to FIG. 8, a projector 800 may include an image projection unit 810, a memory 820, a processor 830, a camera 840, and a communication interface 850. The projector 800 may further include at least one of a user interface (not illustrated) and an input/output interface (not illustrated). The projector 800 may include additional components other than the illustrated components or may omit at least one of the illustrated components.

The projector 800 may refer to an image electronic device projecting (or casting, projection) an image. For example, the projector 800 may be an optical device enlarging and projecting an input image onto a screen (or a wall surface).

The image projection unit 810 may include a light source lamp (not illustrated) and a lens (not illustrated). The light source lamp may refer, for example, to an element that outputs light. The light output from the light source lamp may be projected onto a screen (or a wall surface) through the lens.

The camera 840 is a component for capturing a subject and generating a captured image, and herein, the captured image is a concept including both a moving image and a still image. The camera 840 may include a lens and an image sensor. The types of the lens include a general-purpose lens, a wide-angle lens, and a zoom lens, which may be determined according to the type, characteristics, and usage environment of the projector 800. A complementary metal oxide semiconductor (CMOS) and a charge coupled device (CCD), etc. may be used as the image sensor. The camera 840 may include, but is not limited to, at least one combination of an infrared sensor, a 3D sensor, and an ultrasonic sensor.

The camera 840 outputs incident light as an image signal. Specifically, the camera 840 may include a lens, a pixel, and an AD converter. The lens collects light of a subject and forms an optical image in an imaging region, and the pixel may output light incident through the lens as an image signal in an analog form. And the AD converter may convert the image signal in the analog form into an image signal in a digital form and output the same. In particular, the camera 840 may be disposed to capture at least one of a front direction, a lateral direction, and a rear direction of the projector 800 to capture a user existing around the projector 800 and generate a captured image. The camera 840 may be one or plural in number. In case of capturing using a plurality of cameras, a three-dimensional movement may be analyzed more precisely, which may be effective in analyzing a touch input gesture of the user.

According to an embodiment, the camera 840 may obtain a touch input gesture of the user for the image projected by the image projection unit 810. Specifically, the camera 840 may detect an image of the hand of the user, and may track and detect the movement of the hand of the user. For example, the camera 840 may detect at least one of a size of a hand or finger of the user, a position of the hand of the user, a number of hands of the user, whether the hand of the user is a left hand or a right hand, a distance between the right hand and the left hand of the user, and a gesture by a body portion (e.g., hand) of the user.

According to an embodiment, the camera 840 may detect a user touch gesture input for the image projected on a user input plane. The camera 840 may obtain depth information of the user finger image and three-dimensional depth information of the user input plane. The camera 840 may detect a three-dimensional depth between the finger image of the user and the projected user input plane image. The processor 830 may detect which finger touched which UI object or key in the projected image based on the three-dimensional depth, or may detect whether the user touched a specific coordinate on the user input plane.

The processor 830 may perform overall control operations of the projector 800. For example, the processor 830 has a function of controlling an overall operation of the projector 800. The processor 830 may be embedded in the projector 800, or may be in communication connection to the projector 800 using the communication interface 850.

The processor 830 may be implemented as a digital signal processor (DSP) that processes digital signals, a microprocessor, or a time controller (TCON). However, this is not limited thereto, and the processor 830 may include one or more of a central processing unit (CPU), a micro controller unit (MCU), a micro processing unit (MPU), a controller, an application processor (AP), a graphics processing unit (GPU), a communication processor (CP), and an ARM processor, or may be defined by the corresponding term. Further, the processor 830 may be implemented as a system on chip (SoC) or large scale integration (LSI) having a built-in processing algorithm, or may be implemented in a field programmable gate array (FPGA) form. Further, the processor 830 may perform various functions by executing computer executable instructions stored in the memory 820.

The memory 820 may be implemented as an internal memory such as a ROM (e.g., electrically erasable programmable read-only memory (EEPROM)) or a RAM included in the processor 830, or may be implemented as a separate memory from the processor 830. In this case, the memory 820 may be implemented in the form of a memory embedded in the projector 800 or in the form of a memory detachable from the projector 800 according to data storage purposes. For example, data for driving the projector 800 may be stored in a memory embedded in the projector 800, and data for extended functions of the projector 800 may be stored in a memory detachable from the projector 800.

In the case of the memory embedded in the projector 800, the memory may be implemented as at least one of a volatile memory (e.g., dynamic RAM (DRAM), static RAM (SRAM), or synchronous dynamic RAM (SDRAM), etc.), and a non-volatile memory (e.g., one time programmable ROM (OTPROM), programmable ROM (PROM), erasable and programmable ROM (EPROM), electrically erasable and programmable ROM (EEPROM), mask ROM, flash ROM, a flash memory (e.g., NAND flash or NOR flash, etc.), a hard drive, or a solid state drive (SSD)), and in the case of the memory detachable from the projector 800, the memory may be implemented in the form such as a memory card (e.g., compact flash (CF), secure digital (SD), micro secure digital (Micro-SD), mini secure digital (Mini-SD), extreme digital (xD), multimedia card (MMC), etc.), or an external memory connectable to a USB port (e.g., USB memory).

The user interface (not illustrated) may include at least one of a button, a touch pad, a mouse, a keyboard, and a touch screen. The button may be various types of buttons such as a mechanical button, a touch pad, and a wheel formed in an arbitrary region such as a front part, a side part, or a rear portion of the exterior of the body of the projector 800.

The communication interface 850 may provide a wired/wireless communication interface enabling communication with an external device. The communication interface 850 may transmit/receive (or input/output) at least one of an audio signal and a video signal. The communication interface 850 may include at least one of a wired communication unit, a wireless LAN communication unit, and a short-range communication unit. The wired communication unit may be at least one interface among a high definition multimedia interface (HDMI), a mobile high-definition link (MHL), a universal serial bus (USB), a display port (DP), Thunderbolt, a video graphics array (VGA) port, an RGB port, a D-subminiature (D-SUB), and a digital visual interface (DVI). The wireless LAN communication unit may include, e.g., Wi-Fi, and may support the wireless LAN standard (IEEE802.11x) of the institute of electrical and electronics engineers (IEEE). The wireless LAN communication unit may be wirelessly connected to an access point (AP) under the control of the processor 830. The short-range communication unit may perform short-range communication wirelessly with an external device under the control of the processor 830. The short-range communication may include Bluetooth, Bluetooth low energy, infrared data association (IrDA), ultra-wide band (UWB), Wi-Fi Direct, and near field communication (NFC). The external device may include a display device 700 providing an image, etc. According to an embodiment, the communication interface 850 may perform data communication with the display device 700.

The projector 800 may include a speaker (not illustrated). The speaker (not illustrated) may output various audio data input through the communication interface 850, as well as various notification sounds and voice messages.

According to an embodiment, the processor 830 may determine whether a communication connection to the display device 700 is established using the communication interface 850. In case that the communication connection to the display device 700 is established, the processor 830 may control the communication interface 850 to receive a third output screen including at least one user interface object from the display device 700. The processor 830 may control the image projection unit 810 to project the third output screen. The processor 830 may obtain a user touch input for the third output screen through the camera 840. The processor 830 may control the communication interface 850 to transmit third control data corresponding to the user touch input to the display device 700. For example, the third control data may include a coordinate value on a user input plane, a code value or a key value corresponding to a specific UI object.

According to an embodiment, in case that the communication connection to the display device 700 is established, the processor 830 may control the communication interface 850 to receive the aspect ratio information of the display device 700 from the display device 700. The processor 830 may control the image projection unit 810 to project the third output screen at the same aspect ratio as the aspect ratio information of the display device 700. For example, in case that the aspect ratio information corresponding to 9:16 (width:height) is received from the display device 700, the processor 830 may control the image projection unit 810 to project the third output screen at 9:16.

According to an embodiment, in case that the communication connection to the display device 700 is established, the processor 830 may control the communication interface 850 to receive at least one identification information capable of identifying at least one user interface object from the display device 700. The processor 830 may generate a fourth output screen including at least one user interface object corresponding to the at least one identification information. For example, in case that the at least one identification information identifies each UI object of a related content search window and a text input window, the processor 830 may render and generate an output screen including the related content search window and the text input window. The processor 830 may control the image projection unit 810 to project the fourth output screen. The processor 830 may obtain a user touch input for the fourth output screen through the camera 840. The processor 830 may control the communication interface 850 to transmit fourth control data corresponding to the user touch input to the display device 700. For example, the fourth control data may include a coordinate value on a user input plane, a code value or a key value corresponding to a specific UI object.

According to an embodiment, in case that the communication connection to the display device 700 is established, the processor 830 may control the communication interface 850 to receive control information indicating a standard keyboard output from the display device 700. The control information indicating the standard keyboard output may include, but is not limited to, control information indicating any one among a QWERTY keyboard, a DVORAK keyboard, a COLEMAK keyboard, a QWERTZ keyboard, an AZERTY keyboard, a Korean 2-set keyboard, a Korean 3-set keyboard, or a Japanese industrial standard (JIS) layout keyboard. The processor 830 may generate a fifth output screen including a standard keyboard corresponding to the control information. The processor 830 may control the image projection unit 810 to project the fifth output screen. The processor 830 may obtain a user touch input for the fifth output screen through the camera 840. The processor 830 may control the communication interface to transmit fifth control data corresponding to the user touch input to the display device 700. For example, the fifth control data may include a specific key value touched by the user on the projected standard keyboard screen.

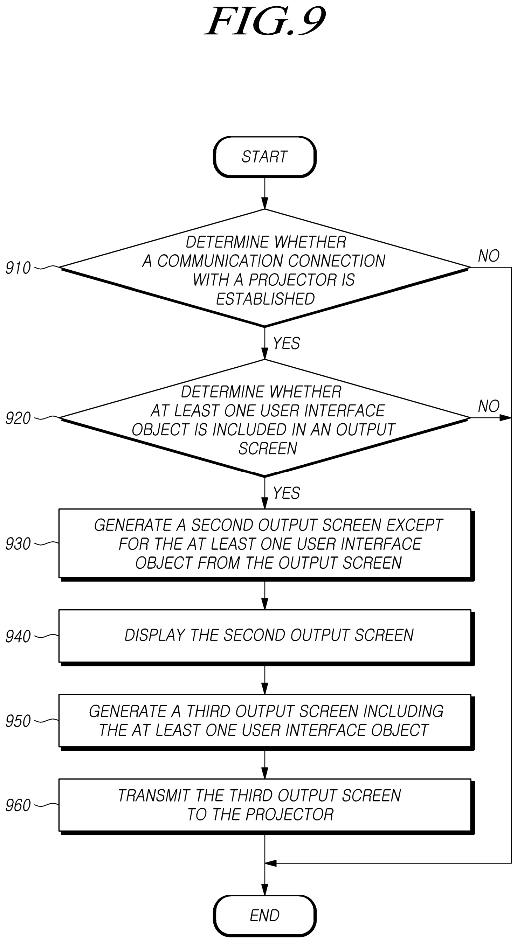

FIG. 9 is a flowchart illustrating an example method of operating a display device according to various example embodiments. The display device of FIG. 9 may correspond to the display device 700 of FIG. 7. In the operation of the display device described in connection to FIG. 9, portions overlapping those described in connection to FIG. 7 may not be repeated here. Some of the operations illustrated in FIG. 9 may be omitted, an operation not illustrated in FIG. 9 may be added, and one or more of the operations may be executed in a different order.

In operation 910 according to an embodiment, the display device 700 may determine whether a communication connection to the projector 800 is established. In case that the communication connection to the projector 800 is established, the process may move to operation 920 and, in case that the communication connection is not established, the process may be terminated.

In operation 920 according to an embodiment, the display device 700 may determine whether at least one user interface object is included in a first output screen. In case that at least one user interface object is included in the first output screen, the process may move to operation 930 and, in case of being not included, the process may be terminated.

In operation 930 according to an embodiment, the display device 700 may generate a second output screen except for the at least one user interface object from the first output screen.

In operation 940 according to an embodiment, the display device 700 may display the second output screen.

In operation 950 according to an embodiment, the display device 700 may generate a third output screen including the at least one user interface object.

In operation 960 according to an embodiment, the display device 700 may transmit the third output screen to the projector 800.

According to an embodiment, the display device 700 may transmit the aspect ratio information of the display device 700 to the projector 800.

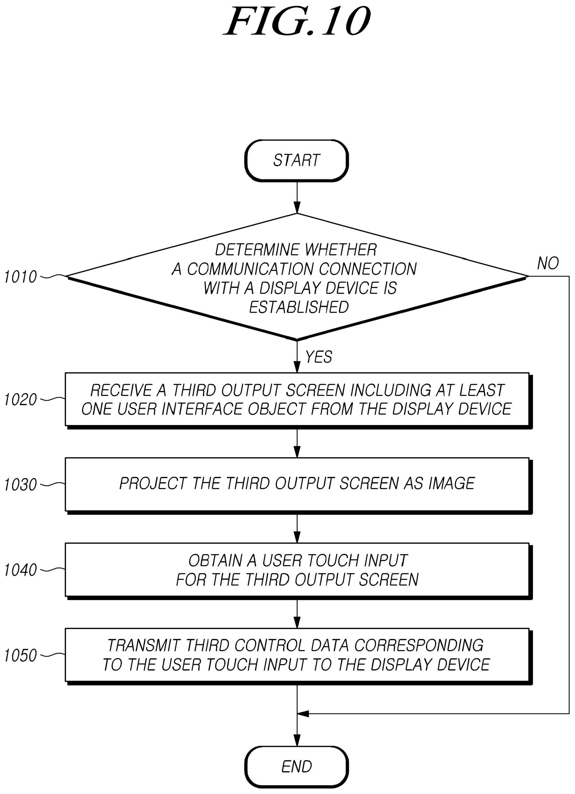

FIG. 10 is a flowchart illustrating an example method of operating a projector according to various example embodiments. The projector of FIG. 10 may correspond to the projector 800 of FIG. 8. In the operation of the projector 800 described in connection to FIG. 10, portions overlapping those described in connection to FIG. 8 may not be repeated here. Some of the operations illustrated in FIG. 10 may be omitted, an operation not illustrated in FIG. 10 may be added, and one or more of the operations may be executed in a different order.

In operation 1010 according to an embodiment, the projector 800 may determine whether a communication connection to the display device 700 is established. In case that the communication connection to the display device 700 is established, the process may move to operation 1020 and, in case that the communication connection is not established, the process may be terminated.

In operation 1020 according to an embodiment, the projector 800 may receive a third output screen including at least one user interface object from the display device 700.

In operation 1030 according to an embodiment, the projector 800 may project the third output screen as an image.

According to an embodiment, the projector 800 may receive the aspect ratio information of the display device 700 from the display device 700. The projector 800 may project the third output screen as an image at the same aspect ratio as the aspect ratio information received from the display device 700.

In operation 1040 according to an embodiment, the projector 800 may obtain an input, for example, a user touch input for the third output screen.

In operation 1050 according to an embodiment, the projector 800 may transmit third control data corresponding to the user touch input to the display device 700. For example, the third control data may include a coordinate value on a user input plane, a code value or a key value corresponding to a specific UI object.

The electronic device according to various embodiments disclosed herein may be one of various types of electronic devices. The electronic devices may include, for example, a display device, a portable communication device (e.g., a smartphone), a computer device, a portable multimedia device, a portable medical device, a camera, a wearable device, a home appliance, or the like. The electronic devices according to an embodiment of the present disclosure are not limited to those described above.

The various embodiments and terms used herein are not intended to limit the technical features described herein to specific embodiments and should be understood to include various modifications, equivalents, or substitutes of the various example embodiments. For example, an element expressed in a singular should be understood as a concept including a plurality of elements unless the context clearly refers only the singular. It should be understood that the term 'and/or' as used herein is intended to encompass any and all possible combinations of one or more of the enumerated items. As used in the present disclosure, the terms such as 'comprise(s)', 'include(s)' 'have/has', 'configured of', etc. are only intended to designate that the features, components, parts, or combinations thereof described in the present disclosure exist, and the use of these terms is not intended to exclude the possibility of the presence or addition of one or more other features, components, parts, or combinations thereof. In this disclosure, each of the phrases such as "A or B", "at least one of A and B", "at least one of A or B", "A, B or C", "at least one of A, B and C", and "at least one of A, B, or C" may include any one of the items enumerated together in a corresponding one of the phrases, or all possible combinations thereof. Terms such as "the first", "the second", or "first", or "second" may be used simply to distinguish a corresponding component from another corresponding component, and do not limit the corresponding components in view of other aspect (e.g., importance or order).

The term "module" or "unit" used in various embodiments of the present disclosure may include a unit implemented in hardware, software, or firmware, or any combination thereof, and be used interchangeably with terms such as e.g., logic, logic block, part, component, or circuitry, for example. The module or unit may be a minimum unit or a part of the integrally configured component or the component that performs one or more functions. For example, according to an embodiment, the module or unit may be implemented in the form of an application-specific integrated circuit (ASIC).

The term "in case ~" used in various embodiments of the present disclosure, may be construed to refer, for example, to "when ~" or "when ~", or "in response to determining ~" or "in response to detecting ~", depending on the context. Similarly, the term "when it is determined that ~" or "when it is detected that ~" may be interpreted to refer, for example, to "upon determining ~" or "in response to determining ~", or "upon detecting ~" or "in response to detecting ~", depending on the context.

The program executed by display device 700, projector 800 described herein may be implemented as a hardware component, a software component, and/or a combination of the hardware component and the software component. The program may be executed by any system capable of executing computer-readable instructions.

Software may include a computer program, codes, instructions, or a combination of one or more of these, and may configure a processing unit to perform operations as desired or command the processing unit independently or in combination (collectively). The software may be implemented as a computer program including instructions stored in a computer-readable storage medium. The computer-readable storage medium may include, for example, a magnetic storage medium (e.g., read-only memory (ROM), random-access memory (RAM), floppy disk, hard disk, and so on), an optically readable medium (e.g., CD-ROM, digital versatile disc (DVD), or the like) and so on. The computer-readable storage medium may be distributed among network-connected computer systems, so that the computer-readable code may be stored and executed in a distributed manner. The computer program may be distributed (e.g., downloaded or uploaded) by online, either via an application store (e.g. Play Store^{™}) or directly between two user devices (e.g., smartphones). In the case of online distribution, at least a part of the computer program product may be temporarily stored or temporarily generated in a machine-readable storage medium such as a memory of a server of a manufacturer, a server of an application store, or a relay server.

According to various embodiments, each component (e.g., module or program) of the above-described components may include a singular or a plurality of entities, and some of the plurality of entities may be separated and placed into other components. According to various embodiments, one or more components or operations among the above-described corresponding components may be omitted, or one or more other components or operations may be added thereto. Alternatively or additionally, a plurality of components (e.g., a module or a program) may be integrated into one component. In this case, the integrated component may perform one or more functions of each component of the plurality of components identically or similarly to those performed by the corresponding component among the plurality of components prior to the integration. According to various embodiments, operations performed by a module, program, or other component may be executed sequentially, in parallel, repeatedly or heuristically, or one or more of the operations may be executed in a different order or omitted, or one or more other operations may be added thereto.

## Claims

1. A display device comprising:
a display;
a communication interface performing data communication with a projector;
memory storing at least one instruction; and
at least one processor electrically connected to the memory and executing the at least one instruction, wherein the at least one processor is configured to:
determine whether a communication connection to the projector is established using the communication interface; and
based on the communication connection to the projector being established:
determine whether at least one user interface object is included in a first output screen;
based on the at least one user interface object being included in the first output screen, generate a second output screen except for the at least one user interface object from the first output screen; and
display the second output screen.

2. The display device of claim 1, wherein at least one processor is configured to,
based on the communication connection to the projector being established:
generate a third output screen including the at least one user interface object; and
control the communication interface to transmit the third output screen to the projector.

3. The display device of claim 2, wherein the at least one processor is configured to,
based on the communication connection to the projector being established:
control the communication interface to transmit aspect ratio information of the display device to the projector.

4. The display device of claim 1, wherein the at least one processor is configured to,
based on the communication connection to the projector being established:
generate at least one identification information capable of identifying the at least one user interface object; and
control the communication interface to transmit the at least one identification information to the projector.

5. The display device of claim 1, wherein the at least one processor is configured to,
based on the communication connection to the projector being established:
generate control information indicating a standard keyboard output; and
control the communication interface to transmit the control information to the projector.

6. A projector comprising:
an image projection unit;
a communication interface performing data communication with a display device;
memory storing at least one instruction; and
at least one processor electrically connected to the memory and executing the at least one instruction, wherein the at least one processor is configured to:
determine whether a communication connection to a display device is established using the communication interface; and
based on the communication connection to the display device being established:
control the communication interface to receive a third output screen including at least one user interface object from the display device;
control the image projection unit to project the third output screen;
obtain a user touch input for the third output screen; and
control the communication interface to transmit third control data corresponding to the user touch input to the display device.

7. The projector of claim 6, wherein the at least one processor is configured to,
based on the communication connection to the display device being established:
control the communication interface to receive aspect ratio information of the display device from the display device; and
control the image projection unit to project the third output screen at the same aspect ratio as the aspect ratio information of the display device.

8. The projector of claim 6, wherein the at least one processor is configured to,
based on the communication connection to the display device being established:
control the communication interface to receive at least one identification information capable of identifying at least one user interface object from the display device;
generate a fourth output screen including at least one user interface object corresponding to the at least one identification information;
control the image projection unit to project the fourth output screen;
obtain a user touch input for the fourth output screen; and
control the communication interface to transmit fourth control data corresponding to the user touch input to the display device.

9. The projector of claim 6, wherein the at least one processor is configured to,
based on the communication connection to the display device being established:
control the communication interface to receive control information indicating a standard keyboard output from the display device;
generate a fifth output screen including a standard keyboard corresponding to the control information;
control the image projection unit to project the fifth output screen;
obtain a user touch input for the fifth output screen; and
control the communication interface to transmit fifth control data corresponding to the user touch input to the display device.

10. A method of operating a display device, the method comprising:
determining whether a communication connection to a projector is established;
based on the communication connection to the projector being established:
determining whether at least one user interface object is included in a first output screen;
based on the at least one user interface object is included in the first output screen, generating a second output screen except for the at least one user interface object from the first output screen; and
displaying the second output screen.

11. The method of claim 10, further comprising,
based on the communication connection to the projector being established:
generating a third output screen including the at least one user interface object; and
transmitting the third output screen to the projector.

12. The method of claim 11, further comprising,
based on the communication connection to the projector being established:
transmitting aspect ratio information of the display device to the projector.

13. A method of operating a projector, the method comprising:
determining whether a communication connection to a display device is established;
based on the communication connection to the display device being established:
receiving a third output screen including at least one user interface object from the display device;
projecting an image of the third output screen;
obtaining a user touch input for the third output screen; and
transmitting third control data corresponding to the user touch input to the display device.

14. The method of claim 13, further comprising,
based on the communication connection to the display device being established:
receiving aspect ratio information of the display device from the display device; and
projecting an image of the third output screen at the same aspect ratio as the aspect ratio information of the display device.

15. A computer-readable recording medium having recorded thereon at least one program for implementing the method according to any one of claims 10 to 14.
